Europäisches Patentamt

European Patent Office

Office européen des brevets

(11) Publication number : **0 520 731 A2**

(19)

# EUROPEAN PATENT APPLICATION

(12)

(21) Application number : **92305726.9**

(22) Date of filing : **22.06.92**

(51) Int. Cl.⁵ : **G06F 15/72**

(30) Priority : **21.06.91 JP 177353/91**

(43) Date of publication of application :
**30.12.92 Bulletin 92/53**

(84) Designated Contracting States :
**DE FR GB**

(71) Applicant : **Kao Corporation**
**14-10, Nihonbashi Kayabacho 1-chome**
**Chuo-Ku Tokyo 103 (JP)**

(72) Inventor : **Nishimine, Naohide**
**3-15-1, Minatomachi**
**Funabashi-shi, Chiba 273 (JP)**
Inventor : **Nakano, Takashi**
**1-3, Asahigaokamachi, Hanamigawa-ku**
**Chiba-shi, Chiba 262 (JP)**
Inventor : **Suzuki, Masayoshi**
**1-3, Asahigaokamachi, Hanamigawa-ku**
**Chiba-shi, Chiba 262 (JP)**

(74) Representative : **Darby, David Thomas et al**
**Abel & Imray Northumberland House 303-306**
**High Holborn**
**London WC1V 7LH (GB)**

(54) **Support device for designing a free curved surface form.**

(57)   A support device, for designing a free curved
surface shape, which automatically revises a
large number of points constituting an already
designed three dimensional surface near a
specific point by using continuous scale func-
tions when the specific point is revised. The
support device enables rational and improved
modification and revision of three dimensional
shapes which pursue aesthetic sensitivity be-
cause it permits automatic revisions on a
screen, such as that the shape should be def-
lated or inflated at certain parts.

FIG. 1

EP 0 520 731 A2

This invention is applicable to computer - aided design for three dimensional shapes. This invention is especially suitable for the design of shapes and of production processes which are obtainable by connecting a large number of free curved surfaces (i.e. surfaces which cannot be defined with quadratic functions) such as a bottle (hereinafter referred to as shapes with complex curved surfaces).

Computer-aided design system (CAD) has been used popularly today, and is applied positively to the industrial fields where three dimensional shapes are dealt with. The prior art CAD generates a shape with complex curved surfaces roughly by the following process.

(1) A sequence of multiple dots within a three dimensional space through which the boundaries of the curved surfaces should pass is designated, and thus designated sequence is interpolated with curves (for example Bézier curves, B - spline curves) which can be expressed with predetermined vector functions respectively to generate a wire - framed shape.

(2) By the process (1) above, a large number of frames circumscribed by boundaries of the surfaces are obtained. A shape with complex curved surfaces is obtained by interpo lating curved surfaces (such as Bézier curved surfaces and B - spline surfaces) which can be expressed with predetermined vector functions by using the boundaries of the surfaces composing the above frames.

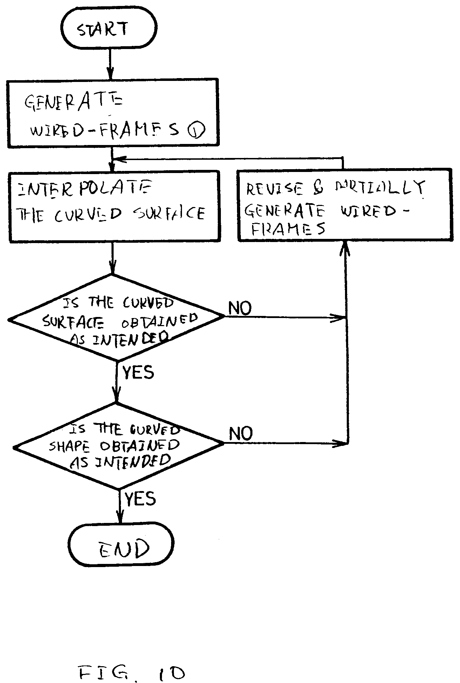

However, surfaces which curve as smoothly as intended by a designer cannot always be attained by conducting the above processes (1) and (2) once, as shown in Fig. 10. This is attributable to several factors such as that the informa tion for the wire frame generated in the process (1) is insufficient, or that the intent of the designer is not reflected right at the time when the shape is wire-framed by interpolation. At any rate, the designer has to repeat partially the process (1) or (2) until he/she gets a surface he/she wishes to generate, thereby wasting his /her precious time.

The prior art CAD cannot quite support the creative works which are essential to the design of shapes. At the steps of the design of shapes, a shape is repeatedly modified and a large number of design alternatives are generated. Eventually those design alternatives are narrowed down to one. When a designer wishes to apply a prior art CAD to creation of such design alternatives, he/she has to spend much time and energy not only for the essential creative works but also for repeated manipulation of the system to obtain intended curved surfaces. In order to reduce the number of repetitions in the work, the designer should learn the characters of curved lines and curved surfaces to generate wire frames for intended surfaces, and are forced to bear many additional burdens.

Even today when CAD systems are prevailing, analog methods such as forming a model with clay are often preferred and proven more effective before a final design is selected. Then, thus selected model is digitalized by measuring methods for further detailed design and processed in digital with computers in the subsequent stages of design and production.

This invention aims to provide a CAD system which can effectively achieve revision or modification of shapes which is generally repeated for a number of times in the design of a shape with complex curved surfaces. More particularly, it aims to provide a CAD system which can revise, change or modify shapes either globally or locally without having to go through the above mentioned processes (1) and (2) or without having to be restricted by generated curved surfaces on the wire frame or frames.

The invention provides an electrical system including storage means for storing a plurality of first data sets each of which defines a three-dimensional shape, selection means for selecting any one of the first data sets from the storage means, display means for displaying a two-dimensional representation of the three-dimensional shape defined by the selected first data set, output means for delivering any specified data set as output data, and control means for controlling the electrical system, characterised in that the control means is capable of effecting operator-directed alteration of a displayed shape in the vicinity of any selected point on the displayed shape and is capable of generating and effecting the storing of an altered data set for the altered shape.

The electrical system is, preferably, a computer-aided design (CAD) system capable of controlling numerically controlled moulding apparatus for producing moulded articles of shapes specified by the data sets. The electrical system allows the inflating and deflating of a selected part of a shape stored as a data set.

Preferably, the control means is capable of effecting operator-directed alteration of the displayed shape in the vicinity of a selected point on the displayed shape by effecting operator-directed generation of a group of points on the surface of the three-dimensional shape, in the vicinity of the selected point, and effecting the change in the shape by moving the group of points.

The electrical system is capable of altering selected parts of the shape.

Preferably, selected points on the surface of a three-dimensional shape are specified by vectors and the control means is capable of effecting alterations by altering selected vectors.

Preferably, the control means is capable of effecting the alteration of the corresponding component of each of a group of vectors by applying a constant scale function to that component of each of the group of vectors.

Thus, the x-component, say, of each of a group of vectors may be altered by a fixed proportion of the original length of x-component of the vector.

Alternatively, the control means may be capable of effecting the alteration of the corresponding component of each of a group of vectors by applying a changing scale function to that component of each of the group of vectors.

Thus, the x-component, say, of each of a group of vectors may be altered in proportion to its y-component, say.

Preferably, the control means is capable of applying the scale function repeatedly in order to effect progressive alteration of a shape.

Preferably, the control means is capable of applying a first scaling factor to each stored data set in order to provide a three-dimensional shape of a specified volume.

Preferably, the control means is capable of applying a second scaling factor to each data set in order to provide a moulded article of a specified volume after shrinkage.

Preferably, the electrical system includes means , capable of specifying mould parameters based on the data set for a mouldable shape, and the control means is capable of generating correction values for the data set for the mouldable shape based on information provided by the means capable of specifying mould parameters.

The invention provides a method of manufacturing an an article of a three-dimensional shape which is defined by an output data set from an electrical system, including the steps, performed by means of the electrical data system, of:

(a) selecting a data set and displaying a two-dimensional representation of the three-dimensional shape defined by the selected data set,

(b) effecting operator-directed alteration of the displayed representation of the shape in the vicinity of a selected point on the displayed representation of the shape,

(c) generating an altered data set for the altered shape,

and transmitting the altered data set as output data from the electrical system to numerically controlled moulding apparatus.

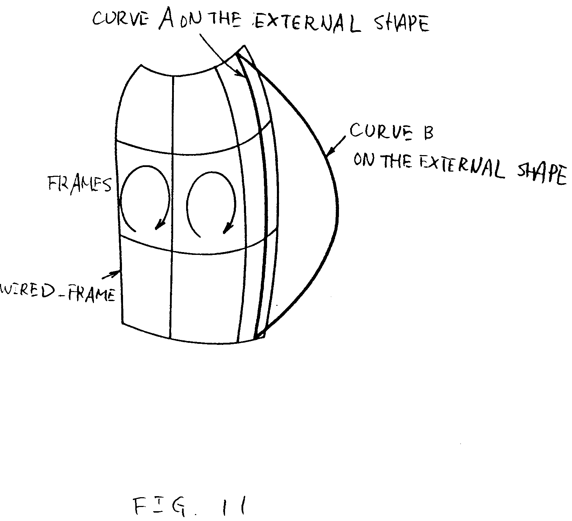

In order to attain the above mentioned purposes, this invention can revise or modify shapes by the first means which generates an external form curve A before revision and an intended external form curve B after revision, as shown in Fig. 11, irrespectively of a wire frame and expresses the ratio of the above two in terms of continuous vector functions (hereinafter scale functions) in respect of a position "s" in the space, and by the second means which transforms curved surfaces or curved lines forming the shape in accordance with the obtained scale functions.

This invention device stores, in a database, groups of data on free curved surfaces and of free curved lines generated by the second means as the data on three dimensional shapes.

The device according to this invention stores in a database a large number of shapes with complex curved surfaces which have been generated in advance, and a user can select a desired shape from the database to use it as the base of the model he/she is going to design. The user designates a plane or a cylindrical surface to obtain the external form line he/she wishes to revise, and instructs the device to calculate the lines intersecting the selecting shape. He/she then revises and modifies thus generated external form curve A to conform to his/her design and generates the external form curve B. When the user instructs the device of the completion of generating the curve B, the first and second means are automatically executed to convey the revised data on the external form curve to cover the entire shape.

If the external form curve he/she wishes to obtain coincides with the wire frame, he/she does not need to give instructions for designating either a plane or a cylindrical surface nor for calculating the intersecting lines, but simply instructs a part of the wire frame to be visible as positive lines, and processes the same as the external form curve A as mentioned above.

In a case where scale values at respective parts are known such as in the case of a metal mold design with the resin contraction ratio taken into consideration, scale functions may be given as positive lines to revise the shape.

This invention device can therefore significantly simplify the operations of revising a shape, and therefore may be applied not only to production process design and metal mold design but also shape model design without problems.

Fig. 1 is a block diagram to show an embodiment of this invention system.

Fig. 2 is a block diagram to show the functions in this invention embodiment when applied to a CAD system for designing a bottle.

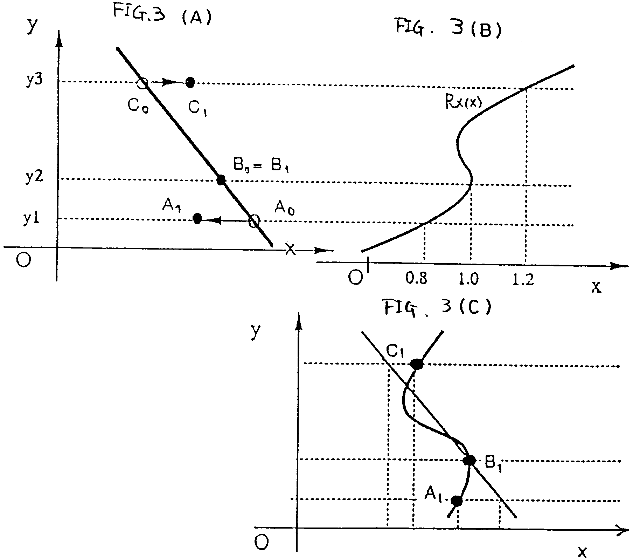

Fig. 3 is an explanatory view to show an example of two dimensional continuous scale functions.

Fig. 4 is an explanatory view to show continuous scale functions when expanded into a three dimensional space.

Fig. 5 is a flow chart to describe the procedure with continuous scale functions.

Fig. 6 is a flow chart to show an example of engineering assessment which entails adjustment of capacity.

Fig. 7 is a detailed flow chart of the section which concerns changes of shapes.

Fig. 8 is a view to show an example of the screen of the CRT display unit which executes engineering assessment.

Figs.9(a) and 9(b) illustrate defects in revising a graphic shape in the prior art systems.

Fig. 10 is a flow chart of external curve revising.

Fig. 11 is a view of external curve revising.

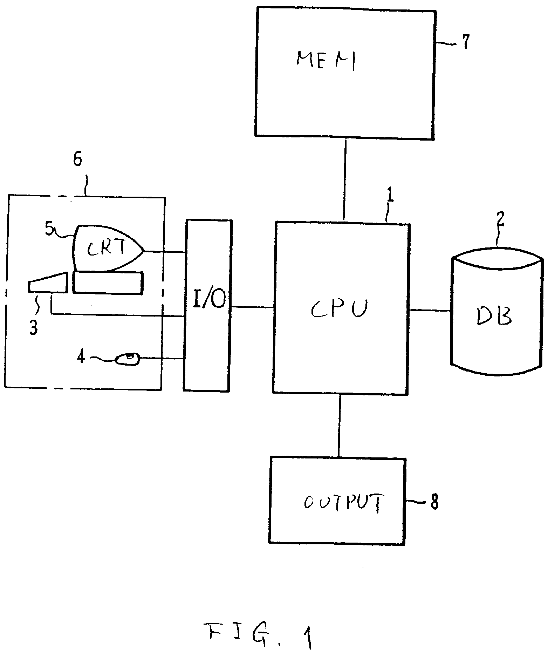

Fig. 1 shows the construction of an embodiment of this invention device which comprises a central processing unit 1, a database 2 connected to the central processing unit 1, a CRT display unit 5 connected to the central processing unit 1, and an operation terminal 6 with a keyboard 3 and a mouse 4 which is connected to the central processing unit 1. A memory device 7 is connected to the central processing unit 1, and stores programs as a CAD system. An output device 8 connected to the central processing unit 1 provides an output in a mode which is convenient for evaluating or using the model designed by the CAD system, such as printed images on a sheet of paper, printing, magnetic disc, and magnetic tape.

The CAD system stores in the database 2 a large number of already generated shapes as the graphic information on three dimensional shapes. The central processing unit 1 has a display means which displays a part of the graphic information on three dimensional shapes which is selectively read out from the database 2 in accordance with the operation at the operation terminal 6. The display means includes a means which classifies the two dimensional information on large number of shapes representing their features and stored in the database 2 according to their features, and displays on said CRT display unit 5 the classified information on the shapes in the unit of a group for the convenience of the retrieval by the user. The user selects one of the graphic information on the three dimensional shapes as the basic shape by designating it among the displayed graphic shapes on the CRT display unit 5 by means of the operation terminal 6 and designs a new shape by revising the basic shape.

The present invention device includes the first through the third program means which are stored in the memory 7 and are to be loaded in the central processing unit 1 for use. More particularly, the system includes the first means which selects a desired shape data out of a large number of three dimensional shape data stored in the database 2 as sets of free curved surfaces, and calculates continuous vector functions (scale functions) as below in the position "s" in the space out of the external form curve A of the shape before revising and the desired external curve B after revising,

$$R = (R_x (s), R_y (s), R_z (s))$$

the second means which converts respective curved surfaces or curved lines forming the shape into sets of respective positional vectors,

$$P = (x, y, z)$$

converts the sets of vectors into sets of vectors of revised positions,

$$P = (R_x (s) \cdot x, R_y (s) \cdot y, R_z (s) \cdot z)$$

and generates respective free curved surfaces and free curved lines based on the sets of revised positional vectors, and

the third means which stores thus generated data on free curved surface groups in the database 2 as the information on three dimensional shapes. Said second means is referred to as function scaling and will be described further herein below.

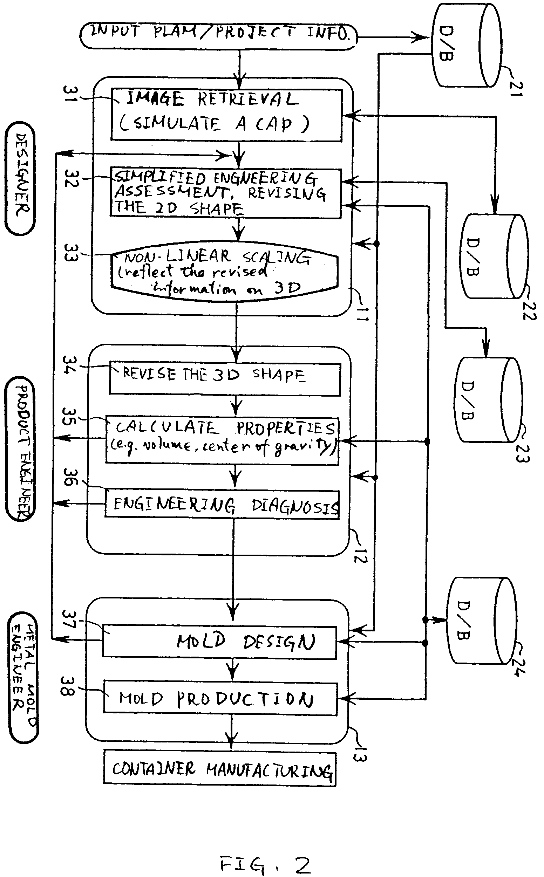

Fig. 2 shows the entire construction of the CAD system which is packaged with this invention system. Among various units and parts of the system shown in Fig. 2, this invention is applicable to the section 11 for revising a two dimensional shape, and the section 12 for revising the three dimensional shape. In Fig. 2, the functions are classified into three sections of 11, 12 and 13 to facilitate understanding. The section 11 is mainly accessed by designers for designing a bottle of beautiful shape according to his/her aesthetic sensitivity. The section 12 is mainly accessed by production engineers for evaluation or design of the bottle from his engineering point of view. The section 13 is mainly accessed by metal mold engineers to design metal molds in detail.

As shown in Fig. 2, the database 2 in this embodiment is divided into plural data bases 21 - 24 in order to prevent confusion in use. The database 21 is large sized, is accessible through in - house communication systems of a company, and stores information on projects or plans. The database 22 holds an extremely large number of data on images for the bottles which have already been designed in the past (shaded image data). The database 23 temporarily stores three dimensional bottle shape data including two dimensional data that are necessary during the process of design by designers. This is a kind of rough sketch notebook. The database 24 is accessible from the three sections 11, 12 and 13 commonly, holds technical information necessary for design, and is used to transfer data among three sections and/or to realize other functions of the system. When desired image information stored in the database 22 is accessed by retrieval, the information is partially read out on the functional database 24 for use. The database 24 can pass a completed design to be added newly in the database 22. The database 22 is to be updated over an extended period of time so as to be used in the optimal form. The functional database 24 is provided in order to manage the database 22 to prevent the large number of basic information therein from being destroyed or prevent meaningless information other than basic information from being written therein.

The design up until this stage has been conducted basically in two dimensions. The design is then converted into three dimensions by the program means 34 and further modified or corrected on contradictory or unclear points which remain unknown in the two dimensions. The resultant design is then technically evaluated through calculations by the program means 35 for cubic volume, and the center of gravity, for the cases where the bottle is filled with liquid, where the liquid is gradually consumed, and where it is emptied. When any improvement is needed, calculation are fed back to the step at the function 11. The feedback is executed via the common database 24.

The design procedure of a bottle by this embodiment system will now be described referring to Fig. 2. By way of example, designing of a shampoo bottle for the new sales campaign is to be described. The designer of the project takes in the campaign policy of the company from the database 21 and understands the requirements and standards to satisfy. He/she gains access to the database 22 to selectively retrieve the basic shape out of various bottle designs of the past. As the database stores the image data on the bottle and the cap separately, the designer can view the combination of the basic shape of the bottle and the basic shape of the cap on the CRT display unit.

Once the data on the basic shape is selected, the designer takes out the bottle shape data from the database 23, stores it and revises the design through the trials and errors. The program means 32 is used for the purpose. The design revision is basically conducted in two dimensions. If necessary, the program means 33 of non - linear scaling is used to display perspective or elevated views to further polish up the design.

When a rough design is completed, the information on the design is temporarily stored in the database 24. It is subject to assessment by a production engineer in the next step. The production engineer reads out the data which is carried over from the database 24 for evaluation.

When the designed bottle is verified for usability as well as salability by the engineer, the procedure advances to the step for metal mold design. The functional section 13 is conducted by a metal mold engineers. He/she designs a metal mold by means of the program means 37 using the information read out from the database 24. If any defect is found such as that the design of the metal mold is infeasible or inconvenient at this stage, the defect is fed back to the preceding step to further revise the design. The data of the metal mold design is basically outputted as an input data for the NC machine tool to process metal molds.

The function scaling with scale functions will now be explained.

If it is assumed that $R_x$, $R_y$ and $R_z$ are arbitrary scalar constants in respect of arbitrary position vectors

$$P = (x, y, z) \quad (1)$$

within a three dimensional space $R^3$, the following formula expresses the scale conversion :

$$P_c = (R_x \cdot x, R_y \cdot y, R_z \cdot z) \quad (2)$$

By expanding this concept, and assuming that continuous vector functions in respect of an arbitrary s in $R^3$ with the following:

$$R = (R_x (s), R_y (s), R_z (s)) \quad (3)$$

the transformed coordinates is obtained as follows :

$$P_f = PR^t$$
$$= (R_x (s) \cdot x, R_y (s) \cdot y, R_z (s) \cdot z) \quad \ldots (4)$$

The transformation is referred to as the function scaling.

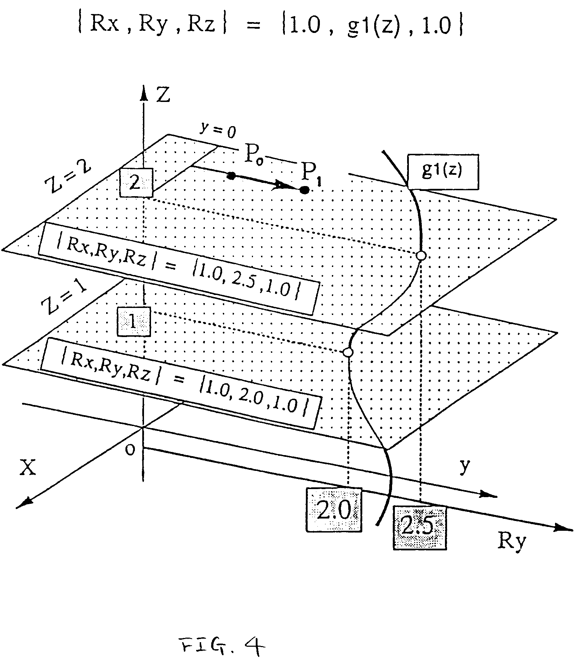

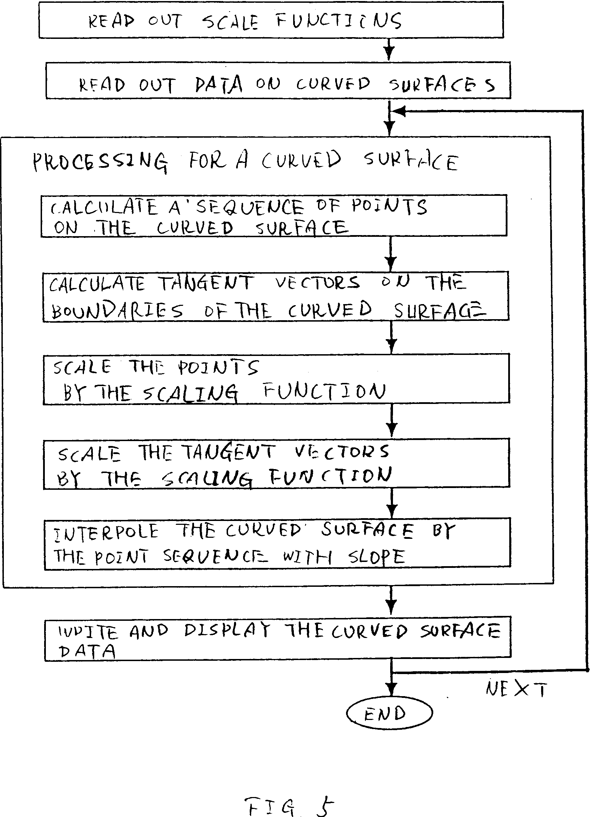

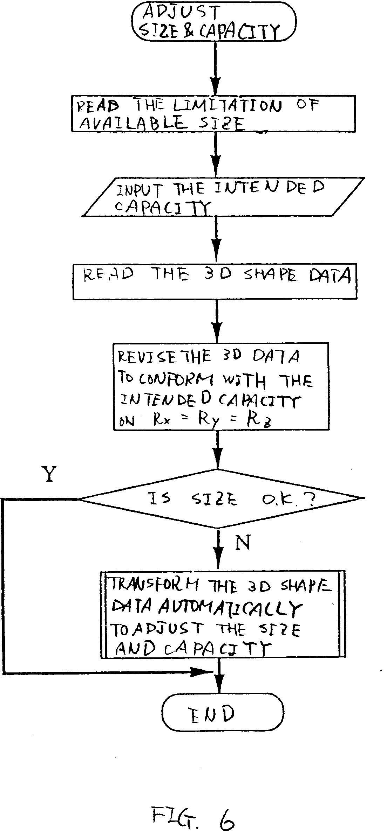

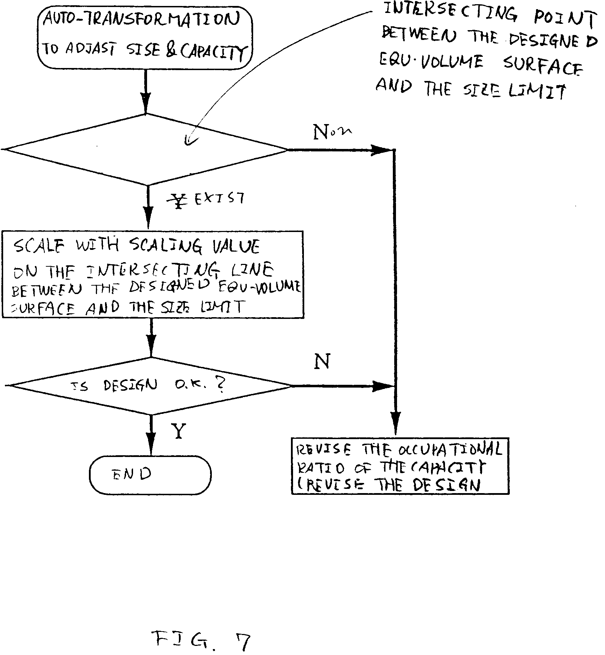

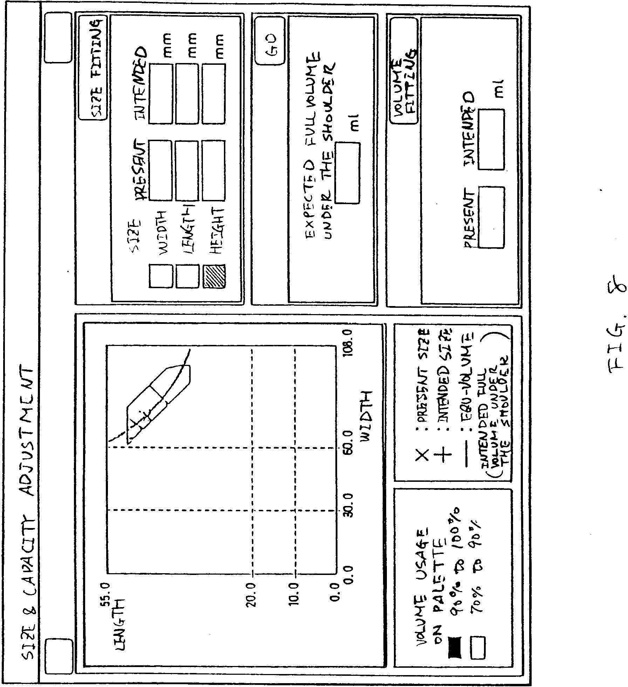

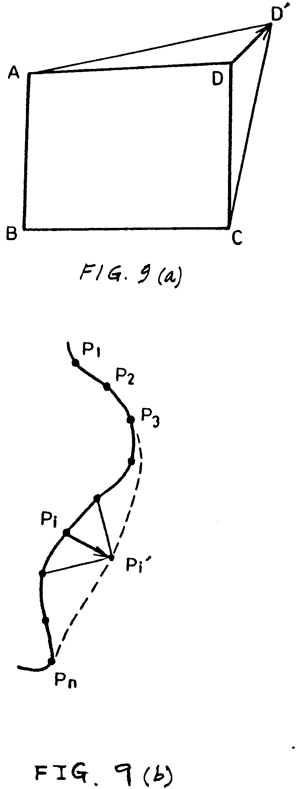

Fig. 4 shows scale values in the three dimensional space both for the case where scale values to be given for scaling are constants, and for the case where they are functions given under the aforementioned definition. When scale values are constants, the same scale value is given at any position in the three dimensional space while when they are functions, different scale values are assigned to respective positions in the space. Therefore, a space is distorted non - linearly by defining the scale functions.

In order to facilitate understanding, an example of conversion in two dimensions will be shown below. If it is assumed that at the scale function R, Rx (s) is assumed to be a transformation function for y :

$$R_x(y) = \sum_{i=0}^{3} C_i y^i = C_0 + C_1 y + C_2 y^2 + C_3 y^3$$

and $R_y(s)$ is fixed at 1.0, the straight line passing the points A $(a_1, b_1)$ and B $(a_2, b_2)$ as the graph of transformation subject which is expressed as below :

$$P(t) = A \cdot (1 - t) + B \cdot t$$
$$\equiv (x(t), y(t))$$
$$= (a_1 \cdot (1 - t) + a_2 \cdot t, \ b_1 \cdot (1 - t) + b_2 \cdot t) \qquad \ldots\ldots(5)$$

becomes as

$$P_f(t) = (R_x(y(t)) \cdot x(t), \ 1.0 \cdot y(t))$$
$$= (\sum_{i=0}^{3} C_i (b_1 \cdot (1 - t) + b_2 \cdot t)^i \cdot (a_1 \cdot (1 - t) + a_2 \cdot t),$$
$$b_1 \cdot (1 - t) + b_2 \cdot t \ ) \qquad \ldots\ldots(6)$$

to be transformed in quadratic parametric curves.

If function scaling is executed for the graphic shape of transformation subject which is a parametric curve of the n - th degree expressed below :

$$P(t) = (x(t), y(t))$$
$$= (\sum_{i=0}^{n} a_i t^i, \ \sum_{i=0}^{n} b_i t^i) \qquad (0 \leq t \leq 1) \quad \ldots(7)$$

using the class of polynomials of the m - th degree for y expressed below :

$$R = (R_x(y), R_y(y))$$
$$= (\sum_{j=0}^{m} C_{1j} y^j, \ \sum_{j=0}^{m} C_{2j} y^j) \qquad \ldots\ldots(8)$$

the relation below is obtained, and the parametric curve of the n - th degree is transformed into a parametric curve of the n · (m + 1) th degree as below:

$$P_i(t) = (R_x(y(t)) \cdot x(t), R_y(y(t)) \cdot y(t))$$

$$= (\sum_{j=0}^{m} C_{1j} \cdot (\sum_{i=0}^{n} b_i \cdot t^i)^j \cdot (\sum_{i=0}^{n} a_i \cdot t^i),$$

$$\sum_{j=0}^{m} C_{2j} \cdot (\sum_{i=0}^{n} b_i \cdot t^i)^j \cdot (\sum_{i=0}^{n} b_i \cdot t^i)) \qquad \ldots\ldots (9)$$

If it is assumed that this conversion is repeated for k times, then the degree $n_k$ of the curve after the transformation will become as below :

$$n_k = n \cdot (m + 1)^k \quad (10)$$

For example, if n = 3, m = 3, and k = 5 are substituted in the formula (10), $n_k$ = 3072 is obtained. This means that several repetitions in operation will increase the degree extremely. The same is applicable to the transformation of curved surfaces. The number of degree which is permitted within the range of smooth operation is easily exceeded after merely several times of repetition in the design support system which is expected to have repeated operations. In this embodiment system, a method of approximation is introduced to make function scaling operate effectively.

Fig. 5 shows the flow chart of operation with approximating scale functions of surfaces according to this invention system.

An application of this invention will now be described. Returning to Fig. 2, this invention has been described as being mainly applicable to the portion of the design procedure for designing shapes of a bottle to which a designer gains access. However, this technology may be applicable further to the revision of three dimensional shapes at the stage to which mainly a product engineer gains access. More particularly, when a design has been completed provisionally, it is subjected to assessment by an engineer. It is examined whether or not the volume and capacity of the designed bottle meet the desired values by calculating the center of gravity for the cases where the bottle is filled fully, where its content is being gradually consumed or where it is emptied, to check if it is easily toppled over. If he/she finds any need for revision, he/she must do so without modifying the design radically. The system according to this invention is quite effectively applied at this stage of revision.

Fig. 6 shows the flow chart of steps for adjusting the size and capacity. in this case, adjustment is executed using continuous scale functions, too. In the flow chart of Fig. 6, the step indicated with double lines in which three dimensional shape data are automatically transformed to adjust the size and capacity will be shown in detail in the flow chart of Fig. 7. Fig. 8 shows the screen of the CRT display unit to execute the operation. The curve appearing in the large section at the upper left of the screen is a part of the scale functions.

When a revision is made, it sometimes needs to be fed back to the preceding steps. Even in such a case, this invention system can effectively execute such revision in a smaller number of steps than before.

As described in the foregoing, by applying the system according to this invention, a designer can revise the basic design in the process of shape design for making a portion thereof inflated or deflated simply by a small number of steps in less working time without having to move a large number of points. This invention system can also be applied to the step of engineering assessment, which can be executed effectively and in fewer steps. If a need for further revision arises in the subsequent steps, it can be executed through smooth feedback operation.

## Claims

1.  A support device for designing a free curved surface shape comprises
    a central processing unit,
    a database connected to the central processing unit,
    a CRT display unit connected to the central processing unit,
    an operation terminal connected to the central processing unit and having a mouse and a keyboard,
    said database storing a large number of data on three dimensional shapes as plural sets of free curved surfaces,
    and which includes
    a first means which expresses revised information for the shape inputted from said operation terminal as continuous vector functions for a position in a space,

a second means which transforms respective curved surfaces or curved lines forming the shape in accordance with the vector functions expressed by the first means, and

a third means which stores in said database groups of data on free curved surfaces or free curved lines generated by the second means as the information on the three dimensional shape.

2. An electrical system including storage means for storing a plurality of first data sets each of which defines a three-dimensional shape, selection means for selecting any one of the first data sets from the storage means, display means for displaying a two-dimensional representation of the three-dimensional shape defined by the selected first data set, output means for delivering any specified data set as output data, and control means for controlling the electrical system, characterised in that the control means is capable of effecting operator-directed alteration of a displayed shape in the vicinity of any selected point on the displayed shape and is capable of generating and effecting the storing of an altered data set for the altered shape.

3. An electrical system as claimed in claim 2, wherein the control means is capable of effecting operator-directed alteration of the displayed shape in the vicinity of a selected point on the displayed shape by effecting operator-directed generation of a group of points on the surface of the three-dimensional shape, in the vicinity of the selected point, and effecting the change in the shape by moving the group of points.

4. An electrical system as claimed in claim 3, wherein points on the surface of a three-dimensional shape are specified by vectors and the control means is capable of effecting alterations by altering selected vectors.

5. An electrical system as claimed in claim 4, wherein the control means is capable of effecting the alteration of the corresponding component of each of a group of vectors by applying a constant scale function to that component of each of the group of vectors.

6. An electrical system as claimed in claim 4, wherein the control means is capable of effecting the alteration of the corresponding component of each of a group of vectors by applying a changing scale function to that component of each of the group of vectors.

7. An electrical system as claimed in claim 5 or claim 6, wherein the control means is capable of applying the scale function repeatedly in order to effect progressive alteration of a shape.

8. An electrical system as claimed in any one of claims 2 to 7, wherein the control means is capable of applying a first scaling factor to each stored data set in order to provide a three-dimensional shape of a specified volume.

9. An electrical system as claimed in claim 8, wherein the control means is capable of applying a second scaling factor to each data set in order to provide a moulded article of a specified volume after shrinkage.

10. An electrical system as claimed in claim 9, including means capable of specifying mould parameters based on the data set for a mouldable shape,-wherein the control means is capable of generating correction values for the data set for the mouldable shape based on information provided by the means capable of specifying mould parameters.

11. A method of manufacturing an article of a three-dimensional shape which is defined by an output data set from an electrical system, including the steps, performed by means of the electrical system, of:

(a) selecting a data set and displaying a two-dimensional representation of the three-dimensional shape defined by the selected data set,

(b) effecting operator-directed alteration of the displayed representation of the shape in the vicinity of a selected point on the displayed representation of the shape,

(c) generating an altered data set for the altered shape,

and transmitting the altered data set as output data from the electrical system to numerically controlled moulding apparatus.

FIG. 1

INPUT PLAN/PROJECT INFO.

D/B  21

31 — IMAGE RETRIEVAL (SIMULATE A CAD)

DESIGNER

32 — SIMPLIFIED ENGNEERING ASSESSMENT, REVISING THE 2D SHAPE

33 — NON-LINEAR SCALING (reflect the revised information on 3D

11

D/B  22

34 — REVISE THE 3D SHAPE

PRODUCT ENGINEER

35 — CALCULATE PROPERTIES (e.g. volume, center of gravity)

D/B  23

36 — ENGINEERING DIAGNOSIS

12

37 — MOLD DESIGN

METAL MOLD ENGINEER

D/B  24

38 — MOLD PRODUCTION

13

CONTAINER MANUFACTURING

FIG. 2

10

FIG.3 (A)

FIG. 3 (B)

FIG. 3 (C)

$$| \, Rx \, , \, Ry \, , \, Rz \, | \; = \; | 1.0 \, , \, g1(z) \, , \, 1.0 \, |$$

FIG. 4

READ OUT SCALE FUNCTIONS

READ OUT DATA ON CURVED SURFACES

PROCESSING FOR A CURVED SURFACE

CALCULATE A SEQUENCE OF POINTS ON THE CURVED SURFACE

CALCULATE TANGENT VECTORS ON THE BOUNDARIES OF THE CURVED SURFACE

SCALE THE POINTS BY THE SCALING FUNCTION

SCALE THE TANGENT VECTORS BY THE SCALING FUNCTION

INTERPOLE THE CURVED SURFACE BY THE POINT SEQUENCE WITH SLOPE

WRITE AND DISPLAY THE CURVED SURFACE DATA

NEXT

END

FIG 5

EP 0 520 731 A2

```
  ┌─────────────────┐
  │  ADJUST         │
  │ SIZE & CAPACITY │
  └─────────────────┘
          │
          ▼
┌──────────────────────────┐
│ READ THE LIMITATION OF   │
│ AVAILABLE SIZE           │
└──────────────────────────┘
          │
          ▼
 ╱──────────────────────────╱
 ╱ INPUT THE INTENDED       ╱
 ╱ CAPACITY                 ╱
╱──────────────────────────╱
          │
          ▼
┌──────────────────────────┐
│ READ THE 3D SHAPE DATA    │
└──────────────────────────┘
          │
          ▼
┌──────────────────────────┐
│ REVISE THE 3D DATA        │
│ TO CONFORM WITH THE       │
│ INTENDED CAPACITY         │
│ ON  Rx = Ry = Rz          │
└──────────────────────────┘
          │
          ▼
```

Y
```
      ◇ IS SIZE O.K.? ◇
          │ N
          ▼
┌──────────────────────────┐
│ TRANSFORM THE 3D SHAPE    │
│ DATA AUTOMATICALLY        │
│ TO ADJUST THE SIZE        │
│ AND CAPACITY              │
└──────────────────────────┘
          │
          ▼
     ┌─────────┐
     │   END   │
     └─────────┘
```

FIG. 6

14

INTERSECTING POINT BETWEEN THE DESIGNED EQU·VOLUME SURFACE AND THE SIZE LIMIT

AUTO-TRANSFORMATION TO ADJAST SISE & CAPACITY

Non

Y EXIST

SCALE WITH SCALING VALUE ON THE INTERSECTING LINE BETWEEN THE DESIGNED EQU-VOLUME SURFACE AND THE SIZE LIMIT

IS DESIGN O.K. ?

N

Y

END

REVISE THE OCCUPATIONAL RATIO OF THE CAPACITY (REVISE THE DESIGN

FIG. 7

FIG. 8

EP 0 520 731 A2

FIG. 9 (a)

FIG. 9 (b)

START

GENERATE
WIRED-FRAMES ①

INTERPOLATE
THE CURVED SURFACE

REVISE & PARTIALLY
GENERATE WIRED-
FRAMES

IS THE CURVED
SURFACE OBTAINED
AS INTENDED — NO

YES

IS THE CURVED
SHAPE OBTAINED
AS INTENDED — NO

YES

END

FIG. 10

CURVE A ON THE EXTERNAL SHAPE

CURVE B
ON THE EXTERNAL SHAPE

FRAMES

WIRED-FRAME

FIG. 11